(19) Europäisches Patentamt
European Patent Office
Office européen des brevets

(11) Veröffentlichungsnummer : **0 416 435 B1**

(12) # EUROPÄISCHE PATENTSCHRIFT

(45) Veröffentlichungstag der Patentschrift :
**03.11.93 Patentblatt 93/44**

(21) Anmeldenummer : **90116437.6**

(22) Anmeldetag : **28.08.90**

(51) Int. Cl.$^5$ : **C08L 77/00,** C08L 71/12, C08K 3/30, C08K 7/02, C08L 51/04, C08K 3/00, // (C08L77/00, 71:12, 51:04), (C08L71/12, 77:00, 51:04)

(54) **Stabilisierte thermoplastische Formmassen auf der Basis von Polyphenylenethern und Polyamiden.**

(30) Priorität : **07.09.89 DE 3929686**

(43) Veröffentlichungstag der Anmeldung :
**13.03.91 Patentblatt 91/11**

(45) Bekanntmachung des Hinweises auf die Patenterteilung :
**03.11.93 Patentblatt 93/44**

(84) Benannte Vertragsstaaten :
**BE DE ES FR GB NL**

(56) Entgegenhaltungen :
**EP-A- 221 341**
**EP-A- 0 260 123**
**EP-A- 0 314 000**
**FR-A- 2 186 510**

(73) Patentinhaber : **BASF Aktiengesellschaft**
**Carl-Bosch-Strasse 38**
**D-67063 Ludwigshafen (DE)**

(72) Erfinder : **Muehlbach, Klaus, Dr.**
**Dr.-Heinrich-Winter-Strasse 19**
**D-6148 Heppenheim (DE)**
Erfinder : **Ostermayer, Bertram, Dr.**
**Zeppelinstrasse 179**
**D-6900 Heidelberg (DE)**

**EP 0 416 435 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft thermoplastische Formmassen, enthaltend als wesentliche Komponenten

A) 10 bis 89,9 Gew.-% eines thermoplastischen Polyamids,

B) 10 bis 89,9 % eines durch Einbau mindestens einer Carbonyl-, Carbonsäure-, Säureanhydrid-, Säureamid-, Säureimid-, Carbonsäureester-, Carboxylat-, Amino-, Hydroxyl-, Epoxy-, Oxazolin-, Urethan-, Harnstoff-, Lactam- oder Halogenbenzylgruppe modifizierten Polyphenylenethers,

C) 0,1 bis 8 Gew.-% eines Metallsulfides und

sowie darüber hinaus

D) 0 bis 40 Gew.-% eines faser- oder teilchenförmigen füllstoffes oder deren Mischungen,

E) 0 bis 25 Gew.-% eines schlagzäh modifzierenden Kautschuks und

F) 0 bis 25 Gew.-% eines Flammschutzmittels.

Weiterhin betrifft die Erfindung die Verwendung dieser Formmassen zur Herstellung von Formkörpern sowie die Formkörper, die unter Verwendung dieser Formmassen als wesentliche Komponenten erhältlich sind.

Blends aus modifizierten Polyphenylenethern und Polyamiden, die gegebenenfalls Füllstoffe enthalten können, sind aus den WO 85/05 372, EP-A-260 123, WO 87/05 304, EP-A-46 040 und WO 86/02 986 bekannt.

Aus der US-4 255 321 sind Mischungen aus Polyphenylenethern und schlagzähem Polystyrol bekannt, die Metallsulfide als Stabilisatoren für die Sauerstoffbeständigkeit der Polymeren enthalten.

Weiterhin sind aus der DE-A-34 43 154, EP-A-221 341 und WO 83/03 834 thermoplastische Formmassen auf Basis von unmodifizierten Polyphenylenethern und Polyamiden bekannt, die Metallsulfide in geringen Mengen enthalten können.

Bei den bislang bekannten Blends sind die mechanischen Eigenschaften zwar punktuell verbessert worden, jedoch mußte in Kauf genommen werden, daß gleichzeitig andere mechanische Eigenschaften schlechter wurden. Insbesondere ist bei Kraftfahrzeugformteilen ein ausgewogenes mechanisches Eigenschaftsprofil essentiell, da z.B. bei multiaxialer Beanspruchung eine hohe Zähigkeit gefordert wird.

Außerdem ließ die Verarbeitbarkeit dieser Blends zu wünschen übrig.

Der vorliegenden Erfindung lag daher die Aufgabe zugrunde, thermoplastische Formmassen zur Verfügung zu stellen, die eine gute Fließfähigkeit und multiaxiale Zähigkeit aufweisen.

Demgemäß wurden die eingangs definierten Formmassen gefunden.

Bevorzugte Massen dieser Art und ihre Verwendung sind den Unteransprüchen zu entnehmen.

Die als Komponente A) in den Massen enthaltenen Polyamide sind an sich bekannt und umfassen die teilkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von ω-Aminocarbonsäuren oder Polyaddition von Lactamen hergestellt werden.

Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner Poly-11-aminoundecansäure und ein Polyamid aus Di(p-aminocyclohexyl)-methan- und Dodecandisäure.

Es ist auch möglich, gemäß der Erfindung Polyamide zu verwenden, die durch Copolykondensation von zwei oder mehr der obengenannten Polymeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolymaide enthalten als Komponente a1) 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von ε-Caprolactam ableiten ($a_2$) und/oder Einheiten, die sich von Adipinsäure und Hexamethylendiamin ($a_3$) ableiten.

Der Anteil an Einheiten die sich von ε-Caprolactam ableiten, beträgt bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35

bis 55 Gew.-% beträgt.

Die Copolyamide können auch sowohl Einheiten von ε-Caprolactam als auch Einheiten von Adipinsäure und Hexamethylendiamin enthalten; in diesem Fall ist darauf zu achten, daß der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten $a_1$)) und 20 bis 50, vorzugsweise 25 bis 40 Gew.-% Einheiten, die sich von ε-Caprolactam ableiten (Einheiten $a_2$)), erwiesen.

Die Herstellung der teilaromatischen Copolyamide kann z.B. nach dem in den EP-A-129 195 und EP 129 196 beschrienen Verfahren erfolgen.

Bevorzugt werden lineare Polyamide mit einem Schmelzpunkt über 200°C.

Bevorzugte Polyamide sind Polyhexamethylenadipinsäureamid, Polyhexamethylensebacinsäureamid und Polycaprolactam sowie Polyamid 6/6T und Polyamid 66/6T. Die Polyamide weisen im allgemeinen eine relative Viskosität von 2,0 bis 5 auf, bestimmt an einer 1 gew.%igen Lösung in 96 %iger Schwefelsäure bei 23°C, was einem Molekulargewicht von etwa 15 000 bis 45 000 entspricht. Polyamide mit einer relativen Viskosität von 2,4 bis 3,5, insbesondere 2,5 bis 3,4 werden bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Der Anteil der Polyamide A) an den erfindungsgemäßen Formmassen beträgt 10 bis 89,9, vorzugsweise 25 bis 71,8 und insbesondere 20 bis 50 Gew.-%.

Als Komponente B) enthalten die erfindungsgemäßen Formmassen 10 bis 89,9, bevorzugt 25 bis 71,8 und insbesondere 20 bis 50 Gew.-% eines modifizierten Polyphenylenethers.

Die Polyphenylenether weisen im allgemeinen ein Molekulargewicht (Gewichtsmittelwert) im Bereich von 10 000 bis 80 000, vorzugsweise von 20 000 bis 60 000 auf.

Dies entspricht einer reduzierten spezifischen Viskosität $\eta_{red}$ von 0,2 bis 0,9 dl/g, vorzugsweise von 0,35 bis 0,8 und insbesondere 0,45 bis 0,6, gemessen in einer 1 gew.%igen Lösung in Chloroform bei 25°C nach DIN 53 726.

Die unmodifizierten Polyphenylenether $b_1$) sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein α-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-phenylen)ether, Poly(2,6-diphenyl-1,4-phenylen)ether, Poly(2,6-dimethoxi-1,4-phenylen)ether, Poly(2,6-diethoxi-1,4-polyphenylen)ether, Poly(2-methoxi-6-ethoxi-1,4-phenylen)ether, Poly(2-ethyl-6-stearyloxi-1,4-phenylen)ether, Poly(2,6-dichlor-1,4-phenylen)ether, Poly(2-methyl-6-phenylen-1,4-phenylenether, Poly(2,6-dibenzyl-1,4-phenylen)ether, Poly(2-ethoxi-1,4-phenylen)ether, Poly(2-chlor-1,4-phenylen)ether, Poly(2,5-dibrom-1,4-phenylen)ether. Bevorzugt werden Polyphenylenether eingesetzt, bei denen die Substituenten Alkylreste mit 1 bis 4 Kohlenstoffatomen sind, wie Poly(2,6-dimethyl-1,4-phenylen)ether, Poly(2,6-diethyl-1,4-phenylen)ether, Poly(2-methyl-6-ethyl-1,4-phenylen)ether, Poly(2-methyl-6-propyl-1,4-phenylen)ether, Poly(2,6-dipropyl-1,4-phenylen)ether und Poly(2-ethyl-6-propyl-1,4-phenylen)ether.

Weiterhin sind Pfropfcopolymere aus Polyphenylenether und vinylaromatischen Polymeren wie Styrol, α-Methylstyrol, Vinyltoluol und Chlorstyrol geeignet.

Funktionalisierte oder modifizierte Polyphenylenether B) sind an sich bekannt, z.B. aus WO-A 86/02086, WO-A 87/00540, EP-A-222 246, EP-A-223 116 und EP-A-254 048.

Üblicherweise wird der Polyphenylenether $b_1$) durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit mit dem 2. Polymeren der Mischung, dem Polyamid, gewährleistet ist.

Die Modifizierung wird im allgemeinen durch Umsetzung eines Polyphenylenethers $b_1$) mit einem Modifiziermittel, das mindestens eine der oben genannten Gruppen enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Geeignete Modifiziermittel ($b_3$) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$- und $C_2$-$C_8$-Alkanolen (Monomere $b_{31}$), die Mono- oder Diamide dieser Säuren wie N-Phenylmaleinimid (Monomere $b_{32}$), Maleinhydrazid, das Säurechlorid des Trimelithsäureanhydrids, Benzol-1,2-dicarbonsäureanhydrid-4-carbonsäure essigsäureanhydrid, Chlorethanoylsuccinaldehyd, Chlorformylsuccinaldehyd, Zitronensäure und Hydroxysuccinsäure. Als Monomere $b_{33}$) seien beispielsweise N-Vinylpyrrolidon und (Meth)acryloylcaprolactam genannt.

Bevorzugt wird in den erfindungsgemäßen Formmassen als Komponente B) ein modifizierter Polyphenylenether eingesetzt, der durch Umsetzen von

$b_1$) 9,94 bis 99,94 Gew.-% eines unmodifizierten Polyphenylenethers,

$b_2$) 0 bis 90 Gew.-% eines vinylaromatischen Polymeren,

$b_3$) 0,05 bis 10 Gew.-% mindestens einer Verbindung aus der Gruppe gebildet aus

- $b_{31}$) einer $\alpha,\beta$-ungesättigten Dicarbonylverbindung,
- $b_{32}$) eines Amid-Gruppen enthaltenden Monomeren mit einer polymerisierbaren Doppelbindung und
- $b_{33}$) eines Lactam-Gruppen enthaltenden Monomeren mit einer polymerisierbaren Doppelbindung,

$b_4$) 0 bis 80 Gew.-% weiterer pfropfaktiver Monomerer und

$b_5$) 0,01 bis 0,09 Gew.-% eines Radikalstarters

wobei sich die Gewichtsprozente auf die Summe von $b_1$) bis $b_5$) beziehen, im Verlaufe von 0,5 bis 15 Minuten bei 240 bis 375°C in geeigneten Misch- und Knetaggregaten wie Zweischneckenextrudern erhältlich ist.

Das vinylaromatische Polymer ($b_2$) soll vorzugsweise mit dem eingesetzten Polyphenylenether verträglich sein.

Das Molekulargewicht dieser an sich bekannten Polymeren liegt im allgemeinen im Bereich von 1500 bis 2 000 000, vorzugsweise im Bereich von 70 000 bis 1 000 000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, $\alpha$-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Gegebenenfalls können bei der Herstellung des modifizierten Polyphenylenethers B auch weitere Comonomere $b_4$) eingesetzt werden, die unter den Herstellungsbedingungen mit den Komponenten $b_1$ und gegebenenfalls $b_2$) reagieren bzw. auf diese aufpfropfen. Beispielsweise seien hier Acrylsäure, Methacrylsäure, Acrylate, Methacrylate und vinylaromatische Monomere wie Styrol, $\alpha$-Methylstyrol und Vinyltoluol genannt, um nur einige aufzuführen.

Der Anteil der Komponente $b_4$) beträgt 0 bis 80, vorzugsweise 0 bis 45 und insbesondere nicht mehr als 20 Gew.-%, bezogen auf die Summe der Komponenten $b_1$) bis $b_5$). Besonders bevorzugt werden Formmassen, die keine Komponente $b_4$) enthalten.

Als Radikalstarter ($b_5$) seien genannt:

Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Ditert.-butylperoxybutan, Dicumylperoxid, tert.-Butylcumylperoxid, 1,3-Di(tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Menthylhydroperoxid und Pinanhydroperoxid sowie hochverzweigte Alkane der allgemeinen Struktur

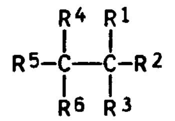

wobei $R^1$ bis $R^6$ Alkylgruppen mit 1 - 8 C-Atomen, Alkoxygruppen mit 1 - 8 C-Atomen, Arylgruppen wie Phenyl, Naphthyl oder 5- oder 6-gliedrige Heterocyclen mit einem $\pi$-Elektronensystem und Stickstoff, Sauerstoff oder Schwefel als Heteroatomen darstellen. Die Substituenten $R^1$ bis $R^6$ können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2,2,3,3-Tetraphenylbutan.

Als Komponente C) enthalten die erfindungsgemäßen Formmassen 0,1 bis 8, vorzugsweise 0,2 bis 4 und insbesondere 0,25 bis 3 Gew.-% eines Metallsulfides.

Geeignete Sulfide sind Alkali- und Erdalkalisulfide, z.B. Natrium-, Kalium-, Calcium- und Bariumsulfid und Metallsulfide der Nebengruppen des Periodensystems wie Mangan-, Eisen-, Nickel-, Kupfersulfid sowie Cadmiumsulfid und besonders bevorzugt Zinksulfid.

Das im Handel erhältliche Zinksulfid enthält im allgemeinen mindestens 97 Gew.-% Zinksulfid neben geringen Anteilen an Bariumsulfat und Zinkoxid.

Üblicherweise weist dieses eine Zinkblende oder Wurzit-Struktur auf, wobei die Dichte im allgemeinen von 2 bis 5 g/cm$^3$, insbesondere von 4 bis 5 g/cm$^3$ beträgt.

Es sind auch Mischungen von Metallsulfiden mit Oxiden verwendbar, wobei das Mischungsverhältnis im allgemeinen 8:2 bis 2:8 beträgt.

In der Regel können die Metallsulfide in Pulverform leicht in die erfindungsgemäßen Formmassen eingearbeitet werden. Bevorzugt sind Konzentrate des Metallsulfides, z.B. in einem Polyamid, da hierbei eine bessere Dispergierung des Pigmentes erreicht werden kann.

Als Komponente D) können die erfindungsgemäßen Formmassen 0 bis 40, vorzugsweise von 10 bis 35 Gew.% faser- oder teilchenförmige Füllstoffe oder deren Mischungen enthalten. Als Beispiele für Füllstoffe seien Kohlenstoff- oder Glasfasern in Form von Glasgeweben, Glasmatten oder Glasseidenrovings, Glaskugeln sowie Wollastonit genannt.

Bevorzugte faserförmige Verstärkungsstoffe (Komponente C) sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Kohlenstoff- und Glasfasern einen Durchmesser im Bereich von 6 bis 20 $\mu$m.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Asbest, Magnesiumcarbonat (Kreide), gepulverter Quarz, Glimmer, Talkum, Feldspat und insbesondere Calciumsilikate wie Wollastonit und Kaolin (insbesondere kalzinierter Kaolin).

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Neben den wesentlichen Komponenten A), B) und C) können die erfindungsgemäßen Formmassen 0 bis 25, bevorzugt 3 bis 20 Gew.-% eines schlagzähmodifizierenden Kautschuks enthalten. Es können übliche Schlagzähmodifier E) verwendet werden, die für Polyamide (Komponente A) geeignet sind und Kautschuke E), die üblicherweise Polyphenylenether B) schlagzähmodifizieren.

Als kautschukelastische Polymerisate E) für Polyamide A) werden solche bevorzugt, die an der Oberfläche reaktive Gruppen aufweisen.

Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

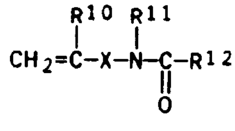

eingeführt werden können,

wobei die Substituenten folgende Bedeutung haben können:

$R^{10}$ Wasserstoff oder eine $C_1$-$C_4$-Alkylgruppe,

$R^{11}$ Wasserstoff, eine $C_1$-$C_8$-Alkylgruppe oder eine Arylgruppe, insbesondere Phenyl,

$R^{12}$ Wasserstoff, eine $C_1$-$C_{10}$-Alkyl-, eine $C_6$-$C_{123}$-Arylgruppe oder $OR^{13}$,

$R^{13}$ eine $C_1$-$C_8$- oder $C_6$-$C_{12}$-Arylgruppe, die gegebenenfalls mit O- oder N-haltigen Gruppen substituiert sein können,

X eine chemische Bindung, eine $C_1$-$C_{10}$-Alkylen- oder $C_6$-$C_{12}$-Arylengruppe oder

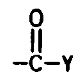

Y O-Z- oder NH-Z und

Z eine $C_1$-$C_{10}$-Alkylen- oder $C_6$-$C_{12}$-Arylengruppe.

Auch die in der EP-A 208 187 beschriebenen Pfropfmonomeren sind zur Einführung reaktiver Gruppen an der Oberfläche geeignet.

Beispiele für Monomere, mit denen die erwähnten funktionellen Gruppen eingeführt werden können, sind Methacrylsäureglycidylester, Acrylsäureglycidylester, Allylglycidylether, Vinylglycidylether, Itaconsäureglycidylester, Acrylsäure, Methacrylsäure und ihre Metall-, insbesondere Alkalimetall- und Ammoniumsalze, Maleinsäure, Fumarsäure, Itaconsäure, Vinylbenzoesäure, Vinylphthalsäure, Monoester dieser Säuren mit Alkoholen ROH, wobei R bis zu 29 Kohlenstoffatome aufweist und z.B. eine Methyl-, Ethyl-, Propyl-, Isopropyl-, n-Butyl-, i-Butyl-, Hexyl-, Cyclohexyl-, Octyl-, 2-Ethylhexyl-, Decyl-, Stearyl-, Methoxyethyl-, Ethoxyethyl- oder Hydroxyethylgruppe darstellt. Maleinsäureanhydrid sowie Ester von Acrylsäure oder Methacrylsäure mit tertiären Alkoholen, z.B. tert.-Butylacrylat weisen zwar keine freien Carboxylgruppen auf, kommen in ihrem Verhalten aber den freien Säuren nahe und werden deshalb als Monomere mit latenten Säuregruppen bezeichnet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Der Anteil der von den vorstehend aufgeführten Monomeren abgeleiteten Gruppen beträgt im allgemeinen 0,5 bis 40, vorzugsweise 0,5 bis 25 Gew.-%, bezogen auf das Gesamtgewicht des Kautschuks.

Diese Monomeren können entweder mit den anderen Monomeren bereits bei der Herstellung des Kautschuks copolymerisiert werden oder aber auf einen bereits fertig vorliegenden, nicht modifizierten Kautschuk aufgepfropft werden (ggf. unter Mitverwendung von Initiatoren, z.B. Radikalstartern).

Bei den Kautschuken handelt es sich im allgemeinen um Polymerisate, die bevorzugt aus mindestens zwei der folgenden Monomeren als Hauptkomponenten aufgebaut sind: Ethylen, Propylen, Butadien, Isobuten, Isopren, Chloro pren, Vinylacetat, Styrol, Acrylnitril, Methacrylsäure, Acrylsäure und Acryl- und Methacrylsäureester mit 1 bis 18 C-Atomen in der Alkoholkomponente.

Als erste bevorzugte Gruppe sind die sogenannten Ethylen-Propylen (EPM) bzw. Ethylen-Propylen-Dien-(EPDM)-Kautschuke zu nennen, die vorzugsweise ein Verhältnis von Ethylenresten zu Propylenresten im Bereich von 40:60 bis 90:10 aufweisen.

Die Mooney-Viskositäten (ML1+4/100°C) solcher unvernetzter EPM bzw. EPDM-Kautschuke (Gelgehalte im allgemeinen unter 1 Gew.-%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexadien-1,5,5-Ethyliden-norbornen und Dicyclopentadien. Der Diengehalt der EPDM-Kautschuke beträgt im allgemeinen 0,5 bis 50, insbesondere 3 bis 15 Gew.-%, bezogen auf das Gesamtgewicht des Kautschuks.

EPM- bzw. EPDM-Kautschuke werden üblicherweise mit den oben genannten, reaktive Gruppen tragenden Monomeren gepfropft. Hier seien nur Acrylsäure, Methacrylsäure und deren Derivate sowie Maleinsäureanhydrid genannt.

Eine weitere Gruppe von Kautschuken sind Copolymere von $\alpha$-Olefinen, vorzugsweise Ethylen, mit Estern

der Acryl- oder Methacrylsäure, z.B. mit den Methyl-, Ethyl-, Propyl-, n-, i- bzw. t-Butyl- und 2-Ethylhexylestern. Zusätzlich können die Kautschuke noch die oben genannten reaktiven Gruppen z.B. in Form von Dicarbonsäuren, Derivate dieser Säuren, Vinylestern und -ethern enthalten.

Der Ethylengehalt der Copolymeren liegt im allgemeinen im Bereich von 50 bis 98 Gew.-%, der Anteil an Epoxidgruppen enthaltenden Monomeren und der Anteil des Acrylsäure- und/oder Methacrylsäureesters jeweils im Bereich von 1 bis 49 Gew.-%.

Bevorzugt sind Olefinpolymerisate aus

| | |
|---|---|
| 50 bis 98,9 | insbesondere 60 bis 95 Gew.-% Ethylen, |
| 0,1 bis 20, | insbesondere 0,15 bis 15 Gew.-% Glycidylacrylat und/oder Glycidylmethacrylat, Acrylsäure und/oder Maleinsäure anhydrid, |
| 1 bis 45, | insbesondere 10 bis 35 Gew.-% n-Butylacrylat und/oder 2-Ethylhexylacrylat. |

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190°C und 2,16 kg Belastung).

Geeignete Elastomere zur Schlagzähmodifizierung von Polyamid sind weiterhin reaktive Gruppen enthaltende Pfropfcopolymerisate mit Butadien, Butadien/Styrol-, Butadien/Acrylnitril- und Acrylesterkautschuken als Pfropfgrundlage, wie sie z.B. in den DE-A 16 94 173, DE-A 23 48 377, DE-A 24 44 584 und DE-A 27 26 256 beschrieben werden. Von diesen seien die sogenannten ABS-Polymerisate erwähnt, wie sie in den DE-A-20 35 390, DE-A-22 48 242 und der EP-A-22 216 beschrieben werden.

Als Kautschuk E können Pfropfpolymerisate aus

| | |
|---|---|
| 25 bis 98 Gew.-% | eines Acrylatkautschuks mit einer Glasübergangstemperatur von unter -20°C als Pfropfgrundlage (Basispolymer) |
| und | |
| 2 bis 75 Gew.-% | eines copolymerisierbaren ethylenisch ungesättigten Monomeren, dessen Homo- bzw. Copolymerisate eine Glasübergangstemperatur von mehr als 25°C aufweisen, als Pfropfauflage (Pfropfhülle) |

eingesetzt werden.

Die Pfropfgrundlage ist ein Acrylat bzw. Methacrylatkautschuk, wobei bis zu 40 Gew.-% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden üblicherweise eingesetzt. Als Comonomere in der Pfropfgrundlage seien Acrylnitril, Methacrylnitril, Styrol, $\alpha$-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird z.B. durch Copolymerisation von vorzugsweise 0,02 bis 5 Gew.-%, insbesondere 0,05 bis 2 Gew.-% eines vernetzenden Monomeren mit mehr als einer Doppelbindung erzielt. Geeignete vernetzende Monomere werden z.B. in der DE-A 27 26 256 und der EP-A 50 265 beschrieben.

Bevorzugte vernetzende Monomere sind Triallylcyanurat, Triallylisocyanurat, Triacryloylhexahydro-s-triazin und Triallylbenzole.

Falls die vernetzenden Monomeren mehr als 2 polymerisierbare Doppelbindungen aufweisen, ist es vorteilhaft, ihre Menge auf nicht mehr als 1 Gew.-%, bezogen auf die Pfropfgrundlage, zu beschränken.

Gut geeignete Pfropfgrundlagen sind Emulsionspolymerisate mit einem Gelgehalt von mehr als 60 Gew.-% (bestimmt in Dimethylformamid bei 25°C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A 50 262 beschrieben werden.

Als Pfropfmonomere eignen sich besonders Styrol, $\alpha$-Methylstyrol, Acrylnitril, Methacrylnitril und Methylmethacrylat oder deren Mischungen, insbesondere solche aus Styrol und Acrylnitril im Gewichtsverhältnis von 1:1 bis 9:1.

Die Einführung der reaktiven Gruppen in Pfropfcopolymerisate kann z.B. durch Mitverwendung der entsprechenden Monomeren bei der Herstellung der Pfropfhülle erfolgen. In diesem Fall beträgt deren Anteil an der Pfropfmonomermischung vorzugsweise 0,5 bis 30, insbesondere 1 bis 25 Gew.-%. Es ist auch möglich, die entsprechenden Monomeren als letzte Pfropfhülle getrennt aufzubringen.

Die Pfropfausbeute, d.h. der Quotient aus der Menge des aufgepfropften Monomeren und der Menge des eingesetzten Pfropfmonomeren liegt im allgemeinen im Bereich von 20 bis 90 %.

Als Beispiele Kautschuke sind solche zu nennen, die den Polyphenylenether B) schlagzäh modifizieren.

Als Beispiele seien thermoplastische Kautschuke, wie Polybutadien-, Polybuten-, Polyisopren-, Acrylnitrilbutadien-, Ethylenpropylen-, Polyester- oder Ethylenkautschuke und elastomere Copolymere aus Ethylen und Estern der (Meth)acrylsäure, z.B. Ethylenbutylacrylatcopolymere erwähnt. Weiterhin seien genannt Ionomere, Polyoctenylene, Pfropfkautschuke mit einem Pfropfkern aus Butadien oder Isopren oder Alkyl(meth)acrylaten und einer Pfropfhülle aus Styrol oder/und α-Methylstyrol sowie vorzugsweise Styrol-Butadien-Blockcopolymere einschließlich AB-, ABA-, und ABAB-Blockcopolymere, die auch verschmierte Übergänge haben können, Sternblockcopolymere und ähnliche, analoge Isoprenblockcopolymerisate und (teil)hydrierte Blockcopolymerisate. Diese Kautschuke können auch in mit vinylaromatischen Monomeren wie Styrol gepfropfter Form eingesetzt werden (EP-A 234 063 und US-A 4 681 915).

Die Kautschuke E weisen vorzugsweise eine Glasübergangstemperatur von unter -30°C, insbesondere von unter -40°C auf. Selbstverständlich können auch Mischungen der vorstehend aufgeführten Kautschuktypen eingesetzt werden.

Die erfindungsgemäßen Formmassen können weiterhin Flammschutzmittel F) in Mengen von 0 bis 25 Gew.-%, bevorzugt bis 15 Gew.-%, bezogen auf das Gesamtgewicht der Formmassen, enthalten.

Es kommen alle bekannten Flammschutzmittel in Betracht, wie z.B. Polyhalogendiphenyl, Polyhalogendiphenylether, Polyhalogenphthalsäure und ihre Derivate, Polyhalogenoligo- und -polycarbonate, wobei die entsprechenden Bromverbindungen besonders wirksam sind.

Beispiele hierfür sind Polymere des 2,6,2',6'-Tetrabrombisphenols A der Tetrabromphthalsäure, des 2,6-Dibromphenols und 2,4,6-Tribromphenols und deren Derivate.

Bevorzugtes Flammschutzmittel F) ist elementarer roter Phosphor. In der Regel kann der elementare Phosphor mit z.B. Polyurethanen oder anderen Aminoplasten phlegmatisiert oder gecoatet werden. Außerdem sind Konzentrate von rotem Phosphor z.B. in einem Polyamid, Elastomeren oder Polyolefin geeignet.

Besonders bevorzugt ist 1,2,3,4,7,8,9,10,13,13,14,14-Dodecachloro-1,4,4a,5,6,6a,7,10,10a,11,12,12a-dodecahydro-1,4:7,10-dimethanodibenzo(a,e)-cyclooctan (Dechlorane®Plus, Occidental Chemical Corp.) und gegebenenfalls einem Synergisten z.B. Antimontrioxid.

Weitere Phosphorverbindungen sind Organophosphorverbindungen wie Phosphonate, Phosphinate, Phosphonate, Phosphinite, Phosphinoxide, Phosphine, Phosphite oder Phosphate sind ebenfalls bevorzugt. Als Beispiel sei Triphenylphosphinoxid genannt. Dieses kann allein oder vermischt mit Hexabrombenzol oder einem chlorierten Biphenyl oder rotem Phosphor und, wahlweise, Antimonoxid verwendet werden.

Typische für die bevorzugten Phosphorverbindungen, die gemäß in der vorliegenden Erfindung verwendet werden können, sind solche der folgenden allgemeinen Formel

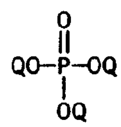

worin Q für Wasserstoff oder für gleiche oder verschiedene Kohlenwasserstoffreste oder Halogenkohlenwasserstoffreste, wie Alkyl, Cycloalkyl, Aryl, alkylsubstituiertes Aryl und arylsubstituiertes Alkyl steht, vorausgesetzt, daß mindestens einer der für Q stehenden Reste ein Arylrest ist. Beispiele solcher geeigneter Phosphate sind z.B. die folgenden: Phenylbisdodecylphosphat, Phenylbisneopentylphosphat, Phenylethylenhydrogenphosphat, Phenyl-bis-(3-5,5'-trimethylhexylphosphat), Ethyldiphenylphosphat, 2-Ethylhexyldi(p-toluyl)phosphat, Diphenylhydrogenphosphat, Bis-(2-ethylhexyl)phenylphosphat, Tri(nonylphenyl)phosphat, Phenylmethylhydrogenphosphat, Di(dodecyl)-p-tolylphosphat, Tricresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phopshonitrilchlorid, Phosphorsäureesteramide, Phosphorsäureesteramine, Phosphorsäureamide, Phosphonsäureamide, Phosphinsäureamide, Tris(Aziridinyl)-phosphinoxid oder Tetrakis(hydroxymethyl) phosphoniumchlorid. Diese entflammungshemmenden Additive sind größtenteils im Handel erhältlich.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N'-Ethylenbistetrabromphthalimid Bedeutung erlangt.

Neben den wesentlichen Komponenten A), B) und C) sowie gegebenenfalls D), E) und F) können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.-%, bezogen auf das Gesamtgewicht der Komponenten A) bis F).

Übliche Zusatzstoffe sind beispielsweise Stabilisatoren und Oxidationsinhibitoren, Mittel gegen Wärmezersetzung und Zersetzung durch ultraviolettes Licht, Gleit- und Entformungsmittel, Farbstoffe, Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Materialien zur Erhöhung der Abschirmung gegen elektromagnetische Wellen wie Metallflocken, -pulver, -fasern, metallbeschichtete Füllstoffe können mitverwendet werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren.

Unter den Zusatzstoffen sind auch Stabilisatoren, die die Zersetzung des roten Phosphors (Komponente F) in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors und Aluminiums genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Die erfindungsgemäßen thermoplastischen Formmassen können nach an sich bekannten Verfahren hergestellt werden, indem man die Ausgangskomponenten in üblichen Mischvorrichtungen wie Schneckenextrudern vorzugsweise Zweischneckenextruder, Brabender-Mühlen oder Banburry-Mühlen sowie Knetern mischt und anschließend extrudiert. Nach der Extrusion wird das Extrudat abgekühlt und zerkleinert.

Um eine möglichst homogene Formmasse zu erhalten, ist eine intensive Durchmischung notwendig. Dazu sind im allgemeinen mittlere Mischzeiten von 0,2 bis 30 Minuten bei Temperaturen von 280 bis 380°C erforderlich. Die Abmischreihenfolge der Komponenten kann variiert werden, so können zwei oder ggf. drei Komponenten vorgemischt werden, es können aber auch alle Komponenten gemeinsam gemischt werden. Es kann von Vorteil sein, den modifizierten Polyphenylenether $B_2$ in einer ersten Zone eines Extruders herzustellen und in einer oder mehreren nachfolgenden Zonen des Extruders mit den übrigen Komponenten der erfindungsgemäßen Formmasse zu vermischen. Ein solches Verfahren ist in der DE-A 37 02 582 beschrieben.

Die erfindungsgemäßen Formmassen zeichnen sich durch eine gute Zähigkeit, insbesondere multiaxiale Zähigkeit kombiniert mit einer guten Verarbeitbarkeit aus.

Infolge dieses Eigenschaftsspektrums eignen sich die aus den erfindungsgemäßen Formmassen herstellbaren Formkörper besonders für Kfz-Teile, Sportgeräte, elektronische und elektrische Gerätebauteile.

Beispiele

Komponente A1)

Poly-ε-Caprolactam mit einem K-Wert (nach Fikentscher) von 73; gemessen in einer 1 gew.-%igen Lösung von 96 gew.-%iger Schwefelsäure bei 25°C; entsprechend einer $\eta_{rel}$ von 2,7.

Komponente A2)

Polyhexamethylenadipinsäureamid mit einem K-Wert von 76; entsprechend einer relativen Viskosität $\eta_{rel}$ von 2,95.

Komponente A3)

Polyhexamethylenadipinsäureamid mit einem K-Wert von 60, entsprechend einer $\eta_{rel}$ von 2,05.

Komponente (B1)

Ein modifizierter Polyphenylenether aus

| | |
|---|---|
| 90 Gew.-% | Poly(2,6-dimethyl-1,4-phenylen)ether ($\eta_{red}$ = 0,59 dl/g, gemessen in einer 1 gew.%igen Lösung in Chloroform bei 25°C), |
| 8 Gew.-% | Polystyrol (Schmelzfließindex MFI bei 200°C/5 kg Belastung: 24 g/10 min) |
| 1,95 Gew.-% | Fumarsäure und |
| 0,05 Gew.-% | 3,4-Dimethyl-3,4-diphenylhexan (Initiator) |

wurde durch Mischen der Komponenten bei Temperaturen von 290 bis 310°C in einem Zweischneckenextruder mit anschließender Entgasung hergestellt. Die Schmelze wurde durch ein Wasserbad geleitet, granuliert und getrocknet.

Komponente (B1*) (zum Vergleich)

Ein unmodifizierter Polyphenylenether mit einem mittleren Molekulargewicht (Gewichtsmittelwert) $M_w$ von 30.000; $\eta_{red}$ = 0,59 dl/g

Komponente C1)

Zinksulfid mit einer Dichte von 4,1 g/cm³.

Komponente C2)

Zinksulfidpigment mit einer mittleren Teilchengröße von 0,35 µm.

Komponente E1)

Ein Styrol-Butadien-Styrol-Dreiblockcopolymer mit einem Styrolgehalt von 30 Gew.-%.

Komponente E2)

Ein Zweiblockcopolymer aus Styrol und hydriertem Polybutadien mit einem Styrolgehalt von 35 Gew.-%; Zahlenmittel des Molekulargewichts $\overline{M}_w$ = 95.000.

Komponente E3)

Ein Ethylencopolymerisat aus:

| | |
|---|---|
| 70 Gew.-% | Ethylen, |
| 25 Gew.-% | n-Butylacrylat und |
| 5 Gew.-% | Acrylsäure |

MFI = 11 g/10 min (190°C/2,16 kg) (DIN 53 735)

Herstellung der Formmassen

Die Komponenten A), B) und C) sowie gegebenenfalls D) bis F) wurden in einem Zweiwellenextruder bei einer Zylindertemperatur von 290°C gemischt. Die Schmelze wurde durch ein Wasserbad geleitet und granuliert. Das getrocknete Granulat wurde bei 280°C zu Schulterstäben und bei 300°C zu Rundscheiben (60 x 2 mm) gespritzt.

Die Durchstoßarbeit wurde nach DIN 53 443 an Rundscheiben bestimmt; der Elastizitätsmodul an Schulterstäben nach DIN 53 437.

Die Fließfähigkeit (MFI) wurde nach DIN 53 735 bei 275°C und einer Belastung von 10 kg bestimmt.

Die Zusammensetzungen der Formmassen und die Ergebnisse der Messungen sind der Tabelle zu entnehmen.

Wie man erkennt sind die Fließfähigkeit und Durchstoßarbeit bei den erfindungsgemäßen Beispielen gegenüber den Vergleichsbeisielen deutlich überlegen.

Tabelle

| Nr. | Zusammensetzung [Gew.-%] | | | | Durchstoß-arbeit [Nm] | Elastizitäts-modul [N/mm2] | MFI [g/10 min] |
|---|---|---|---|---|---|---|---|
| 1 | 48 A1) | 40 B1) | 1 C1) | 11 E1) | 64 | 2240 | 38 |
| 2 | 40 A2) | 45 B1) | 2 C1) | 5 E2) + 8 33) | 71 | 1980 | 45 |
| 3*** | 48 A1) | 39,7 B1) | 1 C1) | 11 E1) | 70 | 2250 | 39 |
| 4** | 48,5 A1) | 40,5 B1) | - | 11 E1) | 51 | 2270 | 27 |
| 5** | 41 A2) | 46 B1) | - | 5 E2) + 8 E3) | 61 | 1950 | 33 |
| 6** | 38 A2) | 34 B1*) | 2 C2) | 11 E1) | 39 | 2410 | 21 |
| 7** | 39 A2) | 39 B1*) | 2 C1) | 9,6 E1) | 25 | 2290 | 30 |
| 8** | 5 A3) | 74,5 B1*) | 0,5 C1) | - | 3 | 2900 | - |
| 9** | - | 50 B1*) | 0,5 C1) | - | 45 | - | - |
| 10** | - | 50 B1*) | - | - | 45 | - | - |
| 11** | - | 50 B1*) | 0,5 C1) +0,5 ZnO | - | 44 | - | - |

Erklärung zur Tabelle:

***) zusätzlich 0,3 Gew.-% 2-(2-Hydroxy-5-Methylphenyl)benzotriazol

**) zum Vergleich

| | |
|---|---|
| Beispiel 6 | enthielt gemäß DE-A-3 443 154 zusätzlich 5 Gew.-% Styrolmaleinsäureanhydridcopolymer (92/8) und 10 Gew.-% Triphenylphosphinoxid |
| Beispiel 7 | enthielt gemäß Beispiel 10 aus EP-A-221 341 10,4 Gew.-% eines Styrolacrylamidcopolymeren (90/10) |
| Beispiel 8 | enthielt gemäß WO 83/0 38 34 20 Gew.-% Triphenylphosphat. |
| Beispiele 9 | bis 11 enthielten gemäß US 4 255 321 schlagfestes Polystyrol mit 8 Gew.-% Polybutadienkautschuk (VZ = 70 ml/g des Matrixstyrols nach DIN 53 726) 9 = 49,5 Gew.-%, 10 = 50 Gew.-%, 11 = 49 Gew.-% |

## Patentansprüche

1. Thermoplastische Formmassen, enthaltend als wesentliche Komponenten
   A) 10 bis 89,9 Gew.-% eines thermoplastischen Polyamids,
   B) 10 bis 89,9 % eines durch Einbau mindestens einer Carbonyl-, Carbonsäure-, Säureanhydrid-, Säureamid-, Säureimid-, Carbonsäureester-, Carboxylat-, Amino-, Hydroxyl-, Epoxy-, Oxazolin-, Urethan-, Harnstoff-, Lactam- oder Halogenbenzylgruppe modifizierten Polyphenylenethers,
   C) 0,1 bis 8 Gew.-% eines Metallsulfides und
   sowie darüber hinaus
   D) 0 bis 40 Gew.-% eines faser- oder teilchenförmigen Füllstoffes oder deren Mischungen,
   E) 0 bis 25 Gew.-% eines schlagzähmodifizierenden Kautschuks und
   F) 0 bis 25 Gew.-% eines Flammschutzmittels.

2. Thermoplastische Formmassen nach Anspruch 1, enthaltend
   A) 25 bis 71,8 Gew.-%,
   B) 25 bis 71,8 Gew.-%,
   C) 0,2 bis 4 Gew.-%,
   E) 3 bis 20 Gew.-%.

3. Thermoplastische Formmassen nach den Ansprüchen 1 und 2, in denen die Komponente C) Zinksulfid ist.

4. Thermoplastische Formmassen nach den Ansprüchen 1 bis 3, in denen die Komponente B) ein modifizierter Polyphenylenether ist, hergestellt aus
   $b_1$) 9,94 bis 99,94 Gew.-% eines Polyphenylenethers,
   $b_2$) 0 bis 90 Gew.-% eines vinylaromatischen Polymeren,
   $b_3$) 0,05 bis 10 Gew.-% mindestens einer Verbindung aus der Gruppe gebildet aus
      $b_{31}$) einer $\alpha,\beta$-ungesättigten Dicarbonylverbindung,
      $b_{32}$) eines Amid-Gruppen enthaltenden Monomeren mit einer Polymerisierbaren Doppelbindung und
      $b_{33}$) eines Lactam-Gruppen enthaltenden Monomeren mit einer Polymerisierbaren Doppelbindung,
   $b_4$) 0 bis 80 Gew.-% weiterer pfropfaktiver Monomerer und
   $b_5$) 0,01 bis 0,09 Gew.-% eines Radikalstarters.

5. Füllstoffhaltige, thermoplastische Formmassen nach den Ansprüchen 1 bis 4, in denen die Füllstoffe Glasfasern, Wollastonit, Kohlenstoff-Fasern oder Mischungen dieser Stoffe sind.

6. Verwendung der thermoplastischen Formmassen gemäß den Ansprüchen 1 bis 5 zur Herstellung von Formkörpern.

7. Formkörper, erhältlich aus den thermoplastischen Formmassen gemäß den Ansprüchen 1 bis 5.

## Claims

1. A thermoplastic molding material containing, as essential components,
   A) from 10 to 89.9 % by weight of a thermoplastic polyamide,
   B) from 10 to 89.9 % by weight of a polyphenylene ether modified by incorporating one or more carbonyl, carboxylic acid, acid anhydride acid amide, acid imide, carboxylic acid ester, carboxylate, amino, hydroxyl, epoxy, oxazoline, urethane, urea, lactam or halobenzyl groups,
   C) from 0.1 to 8 % by weight of a metal sulfide and, in addition,
   D) from 0 to 40 % by weight of a fibrous or particulate filler or a mixture thereof,
   E) from 0 to 25 % by weight of an impact-modifying rubber and
   F) from 0 to 25 % by weight of a flameproofing agent.

2. A thermoplastic molding material as claimed in claim 1, containing
   from 25 to 71.8 % by weight of A),
   from 25 to 71.8 % by weight of B),
   from 0.2 to 4 % by weight of C) and
   from 3 to 20 % by weight of E).

3. A thermoplastic molding material as claimed in claims 1 and 2, in which component C) is zinc sulfide.

4. A thermoplastic molding material as claimed in claims 1 to 3, in which component B) is a modified polyphenylene ether prepared from
   $b_1$) from 9.94 to 99.94 % by weight of a polyphenylene ether,
   $b_2$) from 0 to 90 % by weight of a vinyl-aromatic polymer,
   $b_3$) from 0.05 to 10 % by weight of one or more compounds from the group formed by
      $b_{31}$) an $\alpha,\beta$-unsaturated dicarbonyl compound,
      $b_{32}$) an amide-containing monomer having a polymerizable double bond and
      $b_{33}$) a lactam-containing monomer having a polymerizable double bond,
   $b_4$) from 0 to 80 % by weight of further graft-active monomers and
   $b_5$) from 0.01 to 0.09 % by weight of a free-radical initiator.

5. A filler-containing thermoplastic molding material as claimed in claims 1 to 4, in which the filler comprises glass fibers, wollastonite, carbon fibers or a mixture thereof.

6. The use of a thermoplastic molding material as claimed in claims 1 to 5 for producing moldings.

7. A molding obtainable from a thermoplastic molding material as claimed in claims 1 to 5.

## Revendications

1. Masses à mouler thermoplastiques, contenant, comme composants essentiels,
   A) 10 à 89,9% en poids d'un polyamide thermoplastique,
   B) 10 à 89,9% en poids d'un poly(oxyphénylène) modifié par incorporation d'au moins un groupement carbonyle, acide carboxylique, anhydride, carboxamide, imide, ester carboxylique, carboxylate, amino, hydroxy, époxy, oxazoline, uréthanne, urée, lactame ou halogenobenzyle,
   C) 0,1 à 8% en poids d'un sulfure de métal, ainsi en outre que
   D) 0 à 40% en poids d'une charge en forme de fibres ou de particules ou de mélanges de telles charges,
   E) 0 à 25% en poids d'un caoutchouc modifiant la résistance au choc et
   F) 0 à 25% en poids d'un agent retardant les flammes.

2. Masses à mouler thermoplastiques selon la revendication 1, contenant
   A) à raison de 25 à 71,8% en poids,
   B) à raison de 25 à 71,8% en poids,
   C) à raison de 0,2 à 4% en poids,
   D) à raison de 3 à 20% en poids.

3. Masses à mouler thermoplastiques selon la revendication 1 ou 2, dans lesquelles le composant C) est du sulfure de zinc.

4. Masses à mouler thermoplastiques selon l'une quelconque des revendications 1 à 3, dans lesquelles le composant B) est un poly(oxyphénylène) modifié, préparé à partir de
   $b_1$) 9,94 à 99,94% en poids d'un poly(oxyphénylène),
   $b_2$) 0 à 90% en poids d'un polymére vinylaromatique,
   $b_3$) 0,05 à 10% en poids d'au moins un composé du groupe constitué par
      $b_{31}$) un composé dicarbonylé $\alpha,\beta$-insaturé,
      $b_{32}$) un monomère contenant des groupements amide et comportant une double liaison polymérisable, et
      $b_{33}$) un monomère contenant des groupements lactame et comportant une double liaison polymérisable
   $b_4$) 0 à 80% en poids d'autres monomères à activité de greffage et
   $b_5$) 0,01 à 0,09% en poids d'un amorceur radicalaire.

5. Masses à mouler thermoplastiques chargées selon l'une quelconque des revendications 1 à 4, dans lesquelles les charges sont des fibres de verre, de la wollastonite, des fibres de carbone ou des mélanges de ces matières.

6. Utilisation des masses à mouler thermoplastiques selon l'une quelconque des revendications 1 à 5 pour la fabrication de corps moulés.

7. Corps moulés, obtenus à partir des masses à mouler thermoplastiques selon l'une quelconque des revendications 1 à 5.